# EUROPEAN PATENT SPECIFICATION

(11) **EP 3 107 722 B1**
(45) Date of publication and mention of the grant of the patent: **08.05.2019**
(21) Application number: 15749277.8
(22) Date of filing: 17.02.2015
(51) Int. Cl.: C09J 133/06, C09J 123/28

(54) **PRESSURE-SENSITIVE ADHESIVE**
HAFTKLEBSTOFF
ADHÉSIF SENSIBLE À LA PRESSION

(30) Priority: 17.02.2014 JP 2014027478
(43) Date of publication of application: 28.12.2016
(73) Proprietor: 3M Innovative Properties Company, St. Paul, MN 55133-3427 (US)
(72) Inventor: YODA, Masaki, Tokyo 141-8684 (JP)
(74) Representative: Vossius & Partner Patentanwälte Rechtsanwälte mbB
(86) International application number: PCT/US2015/016139
(87) International publication number: WO 2015/123667

(56) References cited:
- JP-A- 2004 217 807
- US-A- 5 840 783
- US-A1- 2007 093 571
- US-A1- 2011 135 936
- US-A1- 2012 058 329
- US-B1- 6 773 806

## Description

### Field of the Invention

The present invention relates to a pressure-sensitive adhesive.

### Background

Polyolefins such as polypropylene are used in a variety of applications, such as vehicle parts, construction materials, electronic parts, and office equipment, and are also used in a wide variety of environments. Despite being widely used in this way, polyolefins are low surface energy (LSE) materials, and it is therefore difficult to strongly bond these polyolefin materials. As a result, pressure-sensitive adhesives have been proposed as materials able to bond these kinds of materials (for example, see Patent Documents 1 and 2).

### REFERENCE DOCUMENTS

### Patent Documents

Patent Document 1: WO/1996/34066
Patent Document 2: WO/2011/071477

### SUMMARY OF THE INVENTION

### Problems to be Solved by the Invention

In addition to olefin-based homopolymers such as polypropylene, copolymers of ethylene and α-olefins and modified products thereof are also employed in practical applications, and high adhesion to this type of polyolefin is also required. In addition, bonded parts are subjected to a variety of external forces, and environments in which such bonded parts are used range from low temperature to high temperature environments.

### Means for Solving the Problem

One aspect of the present invention provides a pressure-sensitive adhesive that contains a tacky adhesive polymer and a chlorinated polyolefin, wherein a heat of fusion of the chlorinated polyolefin is 0 to 5 J/g, and a content of chlorine in the chlorinated polyolefin is 16 to 25 mass % and wherein the adhesive comprises 0.05 to 5.0 parts by mass of the chlorinated polyolefin relative to 100 parts by mass of the tacky adhesive polymer.

### EFFECT OF THE INVENTION

According to the present invention, it is possible to provide a pressure-sensitive adhesive that exhibits high adhesion to olefin-based homopolymers such as polypropylene, as well as to copolymers of ethylene and α-olefins, olefin-based thermoplastic elastomers (TPO), and olefin-based crosslinked thermoplastic rubbers (TPV). This pressure-sensitive adhesive exhibits sufficient practical strength to be able to withstand a variety of external forces (for example, static shearing load or dynamic peeling load) applied to a bonded polyolefin article, and exhibits high adhesion both initially and over a period of time from low temperatures to high temperatures (for example, from 5°C to 80°C).

### DETAILED DESCRIPTION

The pressure-sensitive adhesive according to the present embodiment is a pressure-sensitive adhesive that contains a tacky adhesive polymer and a chlorinated polyolefin, wherein the heat of fusion of the chlorinated polyolefin is 0 to 5 J/g, and the content of chlorine in the chlorinated polyolefin is 16 to 25 mass % and wherein the adhesive comprises 0.05 to 5.0 parts by mass of the chlorinated polyolefin relative to 100 parts by mass of the tacky adhesive polymer.

Here, "pressure-sensitive adhesive" means an adhesive that exhibits tackiness at usage temperature (typically -20°C to 60°C), and "tackiness" means that the storage modulus (G'), as measured at 10 radians/sec at the usage temperature (a measurement temperature of 20°C to 22°C is preferred), is less than 3 × 10⁵ Pa (the Dahlquist criterion). In addition, the "tacky adhesive polymer" is a polymer that exhibits the aforementioned "tackiness", and the term "polymer" is used in accordance with the definition of "macromolecule" or "polymer" according to the Polymer Nomenclature Committee of The International Union of Pure and Applied Chemistry (IUPAC) (http://main.spsj.or.jp/c19/iupac/Recommendations/glossary36.html). In addition, "mass %" is sometimes expressed as "wt.%", and "mass %" and "wt.%" have the same meaning.

The tacky adhesive polymer can be a polymer obtained by polymerizing a first monomer consisting of at least one type of (meth)acrylic acid ester of a non-tertiary alcohol having 4 to 20 carbons in the alkyl group and a second monomer that copolymerizes with the first monomer. Here, "(meth)acrylic" means acrylic or methacrylic (sometimes expressed as methacrylic), and the same is true for similar compounds. In addition, the second monomer is different from the first monomer.

It is preferable for the first monomer to be a monomer which, when homopolymerized, gives a polymer having a glass transition temperature of less than 0°C. Here, glass transition temperature means the temperature of the Tanδ peak position in dynamic viscoelasticity measurements (in which a frequency of 1.0 Hz and a rate of temperature increase of 5°C/min are preferred) (the same hereinafter). In addition, the first monomer is a monofunctional (meth)acrylic acid ester of a non-tertiary alkyl alcohol having preferably 4 to 20 carbons, and more preferably 4 to 18 carbons, in the alkyl group. Preferred examples of the first monomer include n-butyl acrylate, n-hexyl acrylate, n-octyl acrylate, isooctyl acrylate, 2-ethylhexyl acrylate, isononyl acrylate, n-decyl acrylate, n-dodecyl acrylate, octadecyl acrylate, and mixtures thereof, but the first monomer is not limited to these examples.

It is preferable for the second monomer to be a monomer which has at least one ethylenically unsaturated group and which, when homopolymerized, gives a polymer having a glass transition temperature of greater than 0°C. Preferred examples of the second monomer include (meth)acrylic acid, substituted (meth)acrylamide compounds such as N-vinyl pyrrolidone, N-vinyl caprolactam, and N,N-dimethylacrylamide, acrylonitrile, isobornyl acrylate, acrylates having 1 to 3 carbons in the alkyl group, carboxyethyl acrylate, and mixtures thereof, but the second monomer is not limited to these examples. The second monomer is preferably N,N-dimethylacrylamide or isobornyl acrylate. In addition, in cases where a basic monomer such as a substituted (meth)acrylamide is used as the second monomer, it is preferable to use a weakly basic tertiary amine compound, or the like.

The mass ratio of the first monomer and the second monomer (first monomer / second monomer) is preferably 50 to 100 parts by mass / 0 to 50 parts by mass in order to achieve a balance between initial adhesive strength at low temperatures and static shearing strength at high temperatures.

The chlorinated polyolefin contained in the pressure-sensitive adhesive is a compound in which a chlorine atom is added to a carbon atom in a polyolefin. The chlorinated polyolefin is not particularly limited as long as the heat of fusion thereof is 0 to 5 J/g and the chlorine content therein is 16 to 25 mass %, and examples thereof include polyolefins obtained by chlorinating copolymers of propylene and α-olefins such as ethylene, 1-butene, 1-pentene, 1-hexene, 1-heptene, 1-octene, and 4-methyl-1-pentene. In addition, the chlorinated polyolefin can be a polyolefin obtained by chlorinating a copolymer obtained by further graft polymerizing an α,β-unsaturated carboxylic acid such as maleic acid, maleic acid anhydride, fumaric acid, citraconic acid, citraconic acid anhydride, mesaconic acid, itaconic acid, itaconic acid anhydride, aconitic acid, aconitic acid anhydride, or himic acid anhydride on to a copolymer such as those mentioned above.

Moreover, "the heat of fusion of the chlorinated polyolefin" means the heat of fusion as measured by differential scanning calorimetry (DSC) in accordance with JIS K 7121 (1987). Specifically, in order to eliminate the thermal history of the chlorinated polyolefin, the heat of fusion is measured in a nitrogen atmosphere by increasing the temperature from 23°C to 180°C at a rate of temperature increase of 10°C/min, lowering the temperature from 180°C to -100°C at a rate of temperature decrease of 10°C/min, and then increasing the temperature from -100°C to 180°C at a rate of temperature increase of 10°C/min.

A chlorinated polyolefin having a heat of fusion of 0 to 5 J/g and a chlorine content of 16 to 25 mass % can be produced using, for example, the method disclosed in Japanese Unexamined Patent Application Publication No. 2004-217807. For example, by appropriately adjusting the proportions of propylene and the α-olefin and the quantity of chlorine added in the above-mentioned propylene-α-olefin copolymer, it is possible to produce a chlorinated polyolefin having a heat of fusion of 0 to 5 J/g and chlorine content of 16 to 25 mass %. In addition, this type of chlorinated polyolefin can be procured as, for example, Superchlon 930S or Superchlon 3221S manufactured by Nippon Paper Industries Co., Ltd., Chiyoda-ku, Tokyo, Japan.

From the perspective of compatibility with the tacky adhesive polymer, the heat of fusion of the chlorinated polyolefin is 0 to 5 J/g, preferably 0 to 3 J/g, and more preferably 0 to 2 J/g. Here, if compatibility with the tacky adhesive polymer is low, it is difficult to obtain sufficient adhesive strength. Moreover, it is possible to use a mixture of chlorinated polyolefins at prescribed proportions, but in this case, the heat of fusion is measured using the chlorinated polyolefins mixed at the prescribed proportions.

From the perspective of adhesive strength to a polyolefin base material, the content of chlorine in the chlorinated polyolefin is 16 to 25 mass %, preferably 17 to 24 mass %, and more preferably 17 to 23 mass %. Moreover, the content of chlorine in the chlorinated polyolefin can be measured by, for example, the oxygen flask combustion method (in accordance with JIS K 7229 (1995)).

From the perspective of adhesive strength to a polyolefin base material, the content of the chlorinated polyolefin is 0.05 to 5.0 parts by mass, more preferably 0.1 to 3.0 parts by mass, and further preferably 0.1 to 1.0 parts by mass, relative to 100 parts by mass of the tacky adhesive polymer.

The pressure-sensitive adhesive according to the present embodiment can further contain a tackifier. Examples of tackifiers include hydrocarbon resins, terpene phenol resins, rosin resins, rosin ester resins, and hydrogenated products thereof. Preferred examples of available tackifiers include Regalrez™1085, Regalrez™1094, Regalrez™6108, and Regalrez™3102, which are manufactured by Eastman Chemical Japan Ltd., Minato-ku, Tokyo, Japan, and Arkon P-140, which is manufactured by Arakawa Chemical Industries, Ltd., Osaka City, Osaka Prefecture, Japan.

From the perspective of compatibility with the chlorinated polyolefin used, the content of the tackifier is preferably 10 parts by mass or less, and more preferably 5 parts by mass or less, relative to 100 parts by mass of the tacky adhesive polymer. If the content of the tackifier exceeds this range, compatibility with the chlorinated polyolefin decreases and it can be difficult to achieve sufficient adhesive strength. In addition, the lower limit of the content of the tackifier is not particularly limited, but can be, for example, 0.5 parts by mass or greater relative to 100 parts by mass of the tacky adhesive polymer.

The pressure-sensitive adhesive according to the present embodiment may further contain a polyether-modified silicone. Polyether-modified silicone means a polyorganosiloxane in which at least some of the organic moieties are organic groups having polyoxyalkylenes. The polyoxyalkylene is preferably polyoxyethylene, polyoxypropylene, or poly(oxyethylene/oxypropylene). The polyether-modified silicone can be, for example, a compound represented by general formula (1) below. The polyether-modified silicone can be procured as, for example, SH192 manufactured by Dow Corning Toray Co., Ltd., Chiyoda-ku, Tokyo, Japan. 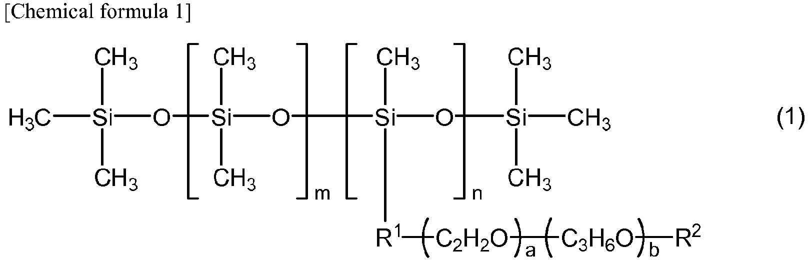 (in the formula, m, n, a, and b are each independently a number of 1 or greater, R¹ is a divalent organic group (and preferably an alkylene group having 1 to 6 carbons), and R² is a hydrogen atom or a monovalent organic group (and preferably an alkyl group having 1 to 6 carbons.)

From the perspective of obtaining a balance between initial adhesive strength at low temperatures and static shearing strength at high temperatures, the content of the polyether-modified silicone is preferably 0.1 to 3.0 parts by mass, more preferably 0.1 to 2.0 parts by mass, and further preferably 0.1 to 1.0 parts by mass, relative to 100 parts by mass of the tacky adhesive polymer.

The pressure-sensitive adhesive according to the present embodiment may further contain publicly known additives used in pressure-sensitive adhesives, such as polymerization initiators, crosslinking agents, plasticizers, fillers, anti-aging agents, UV absorbers, and colorants.

Examples of methods for producing the tacky adhesive polymer contained in the pressure-sensitive adhesive according to the present embodiment include (1) a method of polymerizing the monomer used to obtain the tacky adhesive polymer (if necessary, a variety of additives may be added), and (2) a method of preparing two types of monomers used to obtain the tacky adhesive polymer (if necessary, a variety of additives may be added) (hereinafter referred to as "the first raw material" and "the second raw material"), adding the second raw material to a product obtained by polymerizing a part (for example, approximately 10 mass %) of the first raw material, and then polymerizing all the monomers. Moreover, in order to obtain the pressure-sensitive adhesive according to the present embodiment, either a chlorinated polyolefin having a heat of fusion of 0 to 5 J/g and a chlorine content of 16 to 25 mass % should be added to a tacky adhesive polymer obtained in the manner described above, or polymerization should be carried out in a state whereby this chlorinated polyolefin is added to the above-mentioned monomer, first raw material or second raw material. Moreover, in cases where a polymerization solvent is used, it is preferable to ultimately evaporate off this solvent.

The pressure-sensitive adhesive according to the present embodiment can be advantageously used as a pressure-sensitive adhesive tape by being laminated on a base material such as an acrylic foam tape. This pressure-sensitive adhesive tape can be advantageously used as an adhesive tape for bonding products used under a variety of conditions, such as vehicle parts, construction materials, electronic parts, and office equipment.

### Working Examples

The present invention will now be explained in greater detail through the use of working examples, but is not limited to the working examples given below.

### (Preparation of pressure-sensitive adhesive)

The chlorinated polyolefins, tackifiers, polyether-modified silicones, and photopolymerization initiators used in the working examples and comparative examples are as follows.

### (Chlorinated polyolefin)

Chlorinated polyolefins having the properties shown in table 1 were used. Moreover, the heat of fusion was determined by means of DSC measurements carried out in accordance with JIS K 7121(1987). Specifically, first, in order to eliminate the thermal history of a sample, the temperature was increased from 23°C to 180°C at a rate of temperature increase of 10°C/min in a nitrogen atmosphere. Next, the temperature was lowered from 180°C to -100°C at the rate of temperature decrease of 10°C/min. Next, the temperature was increased from -100°C to 180°C at a rate of temperature increase of 10°C/min, and the heat of fusion was determined from the heat recorded at this point.

**Table 1**

| Product name | Manufacturer | Chlorine content (Mass %) | Heat of fusion [J/g] |
|---|---|---|---|
| Superchlon 930S | Nippon Paper Industries Co., Ltd. | 21 | 0 |
| Superchlon 3221S | Nippon Paper Industries Co., Ltd. | 21 | 0 |
| Superchlon 822S | Nippon Paper Industries Co., Ltd. | 24.5 | 0 |
| Superchlon 3228S | Nippon Paper Industries Co., Ltd. | 28 | 0 |
| Superchlon 892LS | Nippon Paper Industries Co., Ltd. | 22 | 5.9 |
| CP343-1 | Eastman Chemical | 20 | 16.9 |

### (Tackifier)

Arkon P-140: Arakawa Chemical Industries, Ltd.

### (Polyether-modified silicone)

SH 192: Dow Corning Toray Co., Ltd.

### (Photopolymerization initiator)

Irgacure 651: BASF Japan, Minato-ku, Tokyo, Japan

Mixture 1, which had the compositions shown in tables 2 to 6 (units: parts by mass), was irradiated with ultraviolet light at an intensity of 3 mW/cm² for 3 minutes using a low pressure mercury lamp in a nitrogen atmosphere so as to polymerize some of the monomers and obtain a mixture having a viscosity of approximately 2200 mPa·s. Mixture 2, which had the compositions shown in tables 2 to 6 (units: parts by mass), was added to the obtained mixture, heated for 45 minutes at a temperature of approximately 65°C, while stirring, and then cooled to room temperature. Next, this mixture was sandwiched between two poly(ethylene terephthalate) (PET) films that had been surface treated with a silicone release agent, and formed into a sheet by calender molding. Both sides of this sheet were irradiated with ultraviolet light at an intensity of 0.3 mW/cm² for 3 minutes using a low pressure mercury lamp, and then irradiated for 3 minutes with ultraviolet light at an intensity of 7.0 mW/cm². In this way, a tape-like pressure-sensitive adhesive having a thickness of 0.08 mm was obtained. Moreover, the "tacky adhesive polymer" in the pressure-sensitive adhesive is a component obtained from only the monomers and the photopolymerization initiator.

A pressure-sensitive adhesive tape obtained by laminating this tape-like pressure-sensitive adhesive on both surfaces of an acrylic foam tape having a thickness of 1.0 mm (manufactured by Sumitomo 3M Ltd., (Shinagawa-ku, Tokyo, Japan), product name "3M (registered trademark) Acrylic Foam Tape GT 7110") was measured as described below in terms of static shearing strength, 180° peeling strength, and initial tacky adhesive strength. Moreover, when the pressure-sensitive adhesive was laminated on the acrylic foam tape in Working Example 5 and Comparative Example 6, the lamination was carried out after treating the surface of the acrylic foam with a primer (manufactured by Sumitomo 3M Ltd., product name "3M (registered trademark) PAC Primer K-500"). In addition, in Working Examples 9 and 10, the measurements were carried out on the tape-like pressure-sensitive adhesive only, without the acrylic foam tape, instead of the pressure-sensitive adhesive tape. The results are shown in tables 2 to 6.

### (Static shearing strength)

First, a 12 mm × 25 mm pressure-sensitive adhesive tape was laminated on an oxidation-treated aluminum substrate having dimensions of 30 mm × 60 mm × 0.127 mm. Next, a second substrate having the same dimensions as the aluminum substrate was placed on the pressure-sensitive adhesive tape in such a way as to overlap the pressure-sensitive adhesive tape on the aluminum substrate by 25 mm. In this way, the aluminum substrate and the second substrate were disposed in such a way that the ends did not overlap. A 6.8 kg steel roller was passed back and forth once over the sample obtained in this way so that the size of the adhesive region of the pressure-sensitive adhesive tape between the substrates was 12 mm × 25 mm. The second substrate was a polypropylene (PP) substrate or a crosslinked olefin-based thermoplastic rubber (TPV) substrate that was a composite body of a dynamically crosslinked ethylene-propylene-diene rubber (EPDM) and a polypropylene (PP) resin, and was washed with isopropanol prior to use.

Next, the sample was allowed to stand for 24 hours at 23°C and then placed vertically in an oven at 80°C, and a 0.3 kg weight was then hung from the bottom edge of the sample. The time until the weight dropped from the sample under these conditions was recorded. If the weight did not drop from the sample within 10,000 minutes, the test was ended at this point and the time was recorded as 10,000 minutes. In Working Examples 9 and 10, the same measurements were carried out using a 0.4 kg weight.

### (180° peeling strength)

A pressure-sensitive adhesive tape measuring 12 mm × 100 mm was laminated on a PET film having a thickness of 0.05 mm (the surface of which had been subjected to corona treatment) and bonded to a TPV substrate, which had been washed with isopropanol, at room temperature (23°C). At this point, a 2 kg metal roller was passed back and forth once over the bonded article. The sample obtained in this way was stored under the following three conditions.
30 min RT: 30 minutes at 23°C
24H RT: 24 hours at 23°C
2W 80°C: 2 weeks at 80°C

Following storage, the sample was placed on a tensile strength testing-machine, the pressure-sensitive tape was peeled from the substrate at a rate of 50 mm/min in a 180° direction, and the peeling strength at this point was measured. The sample stored at 80°C was cooled to room temperature prior to the test.

### (Low temperature initial tacky adhesive strength)

An article obtained by laminating a pressure-sensitive adhesive tape measuring 12 mm × 100 mm on a PET film having a thickness of 0.025 mm (the surface of which had been subjected to corona treatment), a TPV substrate which had been washed with isopropanol, and a 2 kg metal roller were stored for 2 hours in a low temperature chamber at 5°C. Next, the pressure-sensitive adhesive tape laminated to the PET was bonded to the TPV substrate in the low temperature chamber at 5°C, and the 2 kg metal roller was passed back and forth once over the bonded article. Immediately thereafter, the sample was placed on a tensile strength testing-machine, the pressure-sensitive adhesive tape was peeled from the substrate at a rate of 300 mm/min in a 90° direction, and the peeling strength at this point was measured and recorded as the initial tacky adhesive strength.

**Table 2**

| | | Working Example 1 | Working Example 2 | Working Example 3 | Working Example 4 |
|---|---|---|---|---|---|
| Mixture 1 | 2-ethylhexyl acrylate | 69.4 | 69.4 | 69.4 | 69.4 |
| | Isobornyl acrylate | 23.1 | 23.1 | 23.1 | 23.1 |
| | Acrylic acid | - | - | - | - |
| | N,N-dimethylacrylamide | 3.9 | 3.9 | 3.9 | 3.9 |
| | 1,6-hexane diol dimethacrylate | 0.04 | 0.04 | 0.04 | 0.04 |
| | Irgacure 651 | 0.04 | 0.04 | 0.04 | 0.04 |
| Mixture 2 | Acrylic acid | 1.7 | 1.7 | 1.7 | 1.7 |
| | N,N-dimethylacrylamide | 1.9 | 1.9 | 1.9 | 1.9 |
| | Irgacure 651 | 0.12 | 0.12 | 0.12 | 0.12 |
| | Arkon P-140 | 2 | 2 | 2 | 2 |
| | Superchlon 930S | 0.4 | - | 0.8 | 2.0 |
| | Superchlon 3221S | - | 0.4 | - | - |
| | Superchlon 822S | - | - | - | - |
| | Superchlon 3228S | - | - | - | - |
| | Superchlon 892LS | - | - | - | - |
| | CP343-1 | - | - | - | - |
| Static shearing strength at 80°C (TPV) [min] | | 10000 | 10000 | 10000 | 1017 |
| Static shearing strength at 80°C (PP) [min] | | 10000 | 10000 | 10000 | 1332 |
| 180° peeling strength (30 min RT) [N/cm] | | 11.8 | 12.1 | 12.9 | 11.2 |
| 180° peeling strength (24 H RT) [N/cm] | | 18.2 | 19.1 | 19.5 | 18.5 |
| 180° peeling strength (2W 80°C) [N/cm] | | 20.3 | 21.4 | 20.6 | 22.0 |
| 5°C initial tacky adhesive strength [N/cm] | | 9.7 | 9.6 | 11.1 | 4.1 |

**[Table 3]**

| | | Working Example 5 | Working Example 6 | Working Example 7 | Working Example 8 |
|---|---|---|---|---|---|
| Mixture 1 | 2-ethylhexyl acrylate | 72 | 66 | 69.4 | 69.4 |
| | Isobornyl acrylate | 24 | 20 | 23.1 | 23.1 |
| | Acrylic acid | 4 | 0.1 | - | - |
| | N,N -dimethylacry lamide | - | 14 | 3.9 | 3.9 |
| | 1,6-hexane diol dimethacrylate | 0.04 | 0.04 | 0.04 | 0.04 |
| | Irgacure 651 | 0.04 | 0.04 | 0.04 | 0.04 |
| Mixture 2 | Acrylic acid | - | 1.4 | 1.7 | 1.7 |
| | N,N-dimethylacrylamide | - | - | 1.9 | 1.9 |
| | Irgacure 651 | 0.12 | 0.12 | 0.12 | 0.12 |
| | Arkon P-140 | 2 | 2 | 2 | 2 |
| | Superchlon 930S | 1.6 | 0.15 | 4.0 | - |
| | Superchlon 3221S | - | - | - | - |
| | Superchlon 822S | - | - | - | 0.5 |
| | Superchlon 3228S | - | - | - | - |
| | Superchlon 892LS | - | - | - | - |
| | CP343-1 | - | - | - | - |
| Static shearing strength at 80°C (TPV) [min] | | 321 | 4411 | 1211 | 987 |
| Static shearing strength at 80°C (PP) [min] | | 10000 | 5804 | 1309 | 1218 |
| 180° peeling strength (30 min RT) [N/cm] | | 10.4 | 8.9 | 9.1 | 11.1 |
| 180° peeling strength (24 H RT) [N/cm] | | 18.8 | 15.6 | 16.2 | 15.6 |
| 180° peeling strength (2W 80°C) [N/cm] | | 18.9 | 15.4 | 17.8 | 17.9 |
| 5°C initial tacky adhesive strength [N/cm] | | 5.8 | 5.1 | 4.5 | 6.0 |

**[Table 4]**

| | | Comparative Example 1 | Comparative example 2 | Comparative Example 3 |
|---|---|---|---|---|
| Mixture 1 | 2-ethylhexyl acrylate | 69.4 | 69.4 | 69.4 |
| | Isobornyl acrylate | 23.1 | 23.1 | 23.1 |
| | Acrylic acid | - | - | - |
| | N,N-dimethylacrylamide | 3.9 | 3.9 | 3.9 |
| | 1,6-hexane diol dimethacrylate | 0.04 | 0.04 | 0.04 |
| | Irgacure 651 | 0.04 | 0.04 | 0.04 |
| Mixture 2 | Acrylic acid | 1.7 | 1.7 | 1.7 |
| | N,N-dimethylacrylamide | 1.9 | 1.9 | 1.9 |
| | Irgacure 651 | 0.12 | 0.12 | 0.12 |
| | Arkon P-140 | 2 | 2 | 2 |
| | Superchlon 930S | - | - | - |
| | Superchlon 3221S | - | - | - |
| | Superchlon 822S | - | - | - |
| | Superchlon 3228S | - | 0.5 | - |
| | Superchlon 892LS | 2.0 | - | 0.5 |
| | CP343-1 | - | - | - |
| Static shearing strength at 80°C (TPV) [min] | | 71 | 103 | 107 |
| Static shearing strength at 80°C (PP) [min] | | 73 | 894 | 99 |
| 180° peeling strength (30 min RT) [N/cm] | | 8.4 | 10.2 | 10.8 |
| 180° peeling strength (24 H RT) [N/cm] | | 14.7 | 18.0 | 16.1 |
| 180° peeling strength (2W 80°C) [N/cm] | | 17.0 | 18.3 | 18.0 |
| 5°C initial tacky adhesive strength [N/cm] | | 2.8 | 3.2 | 3.4 |

**[Table 5]**

| | | Comparative Example 4 | Comparative Example 5 | Comparative Example 6 |
|---|---|---|---|---|
| Mixture 1 | 2-ethylhexyl acrylate | 69.4 | 69.4 | 72 |
| | Isobornyl acrylate | 23.1 | 23.1 | 24 |
| | Acrylic acid | - | - | 4 |
| | N,N-dimethylacrylamide | 3.9 | 3.9 | - |
| | 1,6-hexane diol dimethacrylate | 0.04 | 0.04 | 0.04 |
| | Irgacure 651 | 0.04 | 0.04 | 0.04 |
| Mixture 2 | Acrylic acid | 1.7 | 1.7 | - |
| | N,N-dimethylacrylamide | 1.9 | 1.9 | - |
| | Irgacure 651 | 0.12 | 0.12 | 0.12 |
| | Arkon P-140 | 2 | 2 | 2 |
| | Superchlon 930S | - | - | - |
| | Superchlon 3221S | - | - | - |
| | Superchlon 822S | - | - | - |
| | Superchlon 3228S | - | - | - |
| | Superchlon 892LS | - | - | 1.6 |
| | CP343-1 | 0.5 | 4.0 | - |
| Static shearing strength at 80°C (TPV) [min] | | 98 | 84 | 90 |
| Static shearing strength at 80°C (PP) [min] | | 118 | 90 | 133 |
| 180° peeling strength (30 min RT) [N/cm] | | 10.5 | 8.3 | 10.1 |
| 180° peeling strength (24 H RT) [N/cm] | | 16.5 | 13.7 | 18.8 |
| 180° peeling strength (2W 80°C) [N/cm] | | 17.5 | 17.1 | 18.4 |
| 5°C initial tacky adhesive strength [N/cm] | | 2.7 | 3.2 | 5.7 |

**[Table 6]**

| | | Working Example 9 | Working Example 10 |
|---|---|---|---|
| Mixture 1 | 2-ethylhexyl acrylate | 69.4 | 69.4 |
| | Isobornyl acrylate | 23.1 | 23.1 |
| | N,N-dimethylacrylamide | 3.9 | 3.9 |
| | 1,6-hexane diol dimethacrylate | 0.04 | 0.04 |
| | Irgacure 651 | 0.04 | 0.04 |
| Mixture 2 | Acrylic acid | 1.7 | 1.7 |
| | N,N-dimethylacrylamide | 1.9 | 1.9 |
| | Irgacure 651 | 0.12 | 0.12 |
| | Arkon P-140 | 2 | 2 |
| | Superchlon 930S | 0.4 | 0.4 |
| | SH 192 | 0.8 | - |
| Static shearing strength at 80°C (TPV, 0.4 kg) [min] | | 256 | 270 |
| Static shearing strength at 80°C (TPV, 0.3 kg) [min] | | 10000 | 10000 |
| Static shearing strength at 80°C (PP, 0.4 kg) [min] | | 561 | 399 |
| Static shearing strength at 80°C (PP, 0.3 kg) [min] | | 10000 | 10000 |
| 180° peeling strength (30 min RT) [N/cm] | | 3.1 | 3.1 |
| 180° peeling strength (24 H RT) [N/cm] | | 5.9 | 6.3 |
| 180° peeling strength (2W 80°C) [N/cm] | | 7.8 | 8.2 |
| 5°C initial tacky adhesive strength [N/cm] | | 4.8 | 2.1 |

## Claims

1. A pressure-sensitive adhesive comprising
a tacky adhesive polymer and
a chlorinated polyolefin,
a heat of fusion of the chlorinated polyolefin being 0 to 5 J/g, wherein the heat of fusion is measured by differential scanning calorimetry (DSC) in accordance with JIS K 7121 (1987), and
a content of chlorine in the chlorinated polyolefin being 16 to 25 mass %;
wherein the adhesive comprises 0.05 to 5.0 parts by mass of the chlorinated polyolefin relative to 100 parts by mass of the tacky adhesive polymer.

2. The pressure-sensitive adhesive according to claim 1, wherein the tacky adhesive polymer is obtained by polymerizing:
50 to 100 parts by mass of a first monomer comprising at least one type of (meth)acrylic acid ester of a non-tertiary alcohol having 4 to 20 carbons in the alkyl group, and
0 to 50 parts by mass of a second monomer that copolymerizes with the first monomer.

3. The pressure-sensitive adhesive according to claim 1 or 2, which further comprises a tackifier at a quantity of 10 parts by mass or less relative to 100 parts by mass of the tacky adhesive polymer.

4. The pressure-sensitive adhesive according to any one of claims 1 to 3, further comprising a polyether-modified silicone in a quantity of 0.1 to 3.0 parts by mass relative to 100 parts by mass of the tacky adhesive polymer.

## Patentansprüche

1. Ein Haftklebstoff, umfassend:
ein klebriges Klebstoffpolymer und
ein chloriertes Polyolefin,
wobei eine Schmelzwärme des chlorierten Polyolefins 0 bis 5 J/g beträgt, wobei die Schmelzwärme durch Differentialscanningkalorimetrie (DSC) gemäß JIS K 7121 (1987) gemessen wird, und
ein Gehalt an Chlor in dem chlorierten Polyolefin 16 bis 25 Massen-% beträgt;
wobei der Klebstoff 0,05 bis 5,0 Massenteile des chlorierten Polyolefins, bezogen auf 100 Massenteilen des klebrigen Klebstoffpolymers, umfasst.

2. Der Haftklebstoff nach Anspruch 1, wobei das klebrige Klebstoffpolymer erhalten wird durch Polymerisieren von:
50 bis 100 Massenteilen eines ersten Monomers, umfassend mindestens eine Art von (Meth)acrylsäureester eines nicht tertiären Alkohols mit 4 bis 20 Kohlenstoffen in der Alkylgruppe und
0 bis 50 Massenteilen eines zweiten Monomers, das mit dem ersten Monomer copolymerisiert.

3. Der Haftklebstoff nach Anspruch 1 oder 2, der ferner einen Klebrigmacher in einer Menge von 10 Massenteilen oder weniger, bezogen auf 100 Massenteile des klebrigen Klebstoffpolymers, umfasst.

4. Der Haftklebstoff nach einem der Ansprüche 1 bis 3, ferner umfassend ein Polyether-modifiziertes Silikon in einer Menge von 0,1 bis 3,0 Massenteile, bezogen auf 100 Massenteile des klebrigen Klebstoffpolymers.

## Revendications

1. Adhésif sensible à la pression comprenant
un polymère adhésif collant et
une polyoléfine chlorée,
une chaleur de fusion de la polyoléfine chlorée allant de 0 à 5 J/g, dans lequel la chaleur de fusion est mesurée par calorimétrie différentielle à balayage (DSC) conformément à JIS K 7121 (1987), et
une teneur en chlore dans la polyoléfine chlorée allant de 16 à 25 % en masse ; dans lequel l'adhésif comprend 0,05 à 5,0 parties en masse de la polyoléfine chlorée par rapport à 100 parties en masse du polymère adhésif collant.

2. Adhésif sensible à la pression selon la revendication 1, dans lequel le polymère adhésif collant est obtenu par polymérisation :
de 50 à 100 parties en masse d'un premier monomère comprenant au moins un type d'ester d'acide (méth)acrylique d'un alcool non tertiaire ayant 4 à 20 carbones dans le groupe alkyle, et
de 0 à 50 parties en masse d'un deuxième monomère qui copolymérise avec le premier monomère.

3. Adhésif sensible à la pression selon la revendication 1 ou 2, qui comprend en outre un agent collant, à une quantité de 10 parties en masse ou moins par rapport à 100 parties en masse du polymère adhésif collant.

4. Adhésif sensible à la pression selon l'une quelconque des revendications 1 à 3, comprenant en outre une silicone à modification polyéther en une quantité de 0,1 à 3,0 parties en masse par rapport à 100 parties en masse du polymère adhésif collant.
